# EUROPÄISCHE PATENTSCHRIFT

(11) **EP 0 615 712 B1**
(45) Veröffentlichungstag und Bekanntmachung des Hinweises auf die Patenterteilung: **07.05.1997**
(21) Anmeldenummer: 94103162.7
(22) Anmeldetag: 03.03.1994
(51) Int. Cl.: A47G 19/24, A47J 47/16

(54) **Einheit bestehend aus einem Halter und mehreren hängend angeordneten Gewürzbehältern**
Unit comprising a bracket and several suspended spice containers
Ensemble constitué de plusieurs récipients pour épices pendant d'une console

(30) Priorität: 15.03.1993 DE 4308136
(43) Veröffentlichungstag der Anmeldung: 21.09.1994
(73) Patentinhaber: LEIFHEIT Aktiengesellschaft, D-56377 Nassau (DE)
(72) Erfinder: Brand, Dieter, D-56130 Bad Ems (DE)

(56) Entgegenhaltungen:
- EP-A- 0 543 111
- DE-A- 1 913 349
- DE-U- 9 108 514
- GB-A- 759 184
- US-A- 2 519 671

## Beschreibung

Die Erfindung betrifft eine Einheit gemäß dem Oberbegriff des Anspruchs 1 (siehe die DE-U-9108514).

Durch die EP-A-2-0543111 wurde ebenfalls eine derartige Einheit, allgemein als Gewürzbord bezeichnet, bekannt, bei der die Gewürzbehälter durch magnetische Anziehungskraft abnehmbar im Verschlußkörper gehalten sind. Diese Lösung hat sich in der Praxis bewährt, sie ist aber durch den Einsatz der Magnete verhältnismäßig teuer. Um eine einwandfreie Funktion auch über längere Zeit zu erreichen, ist es erforderiich, daß die Magnete exakt, d.h. in zulässigem Toleranzbereich bezüglich des Abstandes Magnet/Streuscheibe eingesetzt sind. Nachteilig ist auch, daß die Magnetkraft durch Verschmutzung nachläßt.

Weiter ist durch die Druckschrift DE-A-1-913349 ein Gewürzbehälter bekannt, bei dem der Verschlußkörper am Behälterhals über einen in Nuten angeordneten Dichtring drehbar gelagert. Um Gewürze zu entnehmen, muß der Verschlußkörper entsprechend verdreht werden, wodurch Streuöffnungen freigegeben werden. Dazu müssen beide Hände benutzt werden.

Der Erfindung liegt die Aufgabe zugrunde, eine Einheit der gattungsgemäßen Art zu schaffen, bei der das Aufsetzen und Abziehen der Gewürzbehälter aus dem Verschlußkörper mit einer Hand und äußerst geringem Kraftaufwand erfolgen kann und bei der trotzdem ein dichter Abschluß des Gewürzbehälters im Verschlußkörper gewährleistet ist.

Diese Aufgabe wird erfindungsgemäß mit den im Kennzeichen des Anspruchs 1 angegebenen Merkmalen gelöst.

Beim Aufsetzen des Verschlußkörpers schnappt der in der einen Umfangsnut angeordnete O-Ring in die andere Umfangsnut und er bildet einen dichten Abschluß, wobei nur eine geringe Kraft aufgewendet werden muß, um die Verschlußkappe über bzw. den Behälterhals in den O-Ring zu schieben und diesen etwas zusammen- bzw. auseinanderzudrücken, bis er in die andere Umfangsnut einrastet. Der gleiche geringe Kraftaufwand ist beim Abziehen des Verschlußkörpers erforderlich.

Um sicherzustellen, daß der O-Ring beim Aufsetzen und Abziehen des Verschlußkörpers in seiner Umfangsnut bleibt, ist es zweckmäßig, die den O-Ring aufnehmende Umfangsnut tiefer auszubilden als die andere Umfangsnut. Letztere kann die Form einer flachen Rinne haben.

Die äußere Umfangsnut kann direkt am Behälterhals oder auch in der Außenfläche einer auf dem Behälterhals angebrachten Kappe vorgesehen sein. Diese Kappe kann gleichzeitig eine Streuscheibe aufweisen.

Zur Halterung einer Mehrzahl von erfindungsgemäßen Gewürzbehältern ist erfindungsgemäß ein Halter vorgesehen, in den die Verschlußkörper der Gewürzbehälter eingehängt werden können oder integriert sind. Dieser Halter kann von einer Schiene gebildet sein, in der zur Aufnahme der Behälterhälse nach unten zu offene Ausnehmungen vorgesehen sind, die jeweils eine zylindrische Umfangswand mit einer Umfangsnut an der Innenfläche und eine obere Abschlußwand aufweisen und die Verschlußkörper bilden.

Die Erfindung wird im folgenden unter Bezugnahme auf die Zeichnungen beispielshalber erläutert. Es zeigt:
- Fig. 1: einen Behälterhals mit aufgestecktem und in eine Halteschiene eingehängtem Verschlukörper im Längsschnitt,
- Fig. 2: eine Ansicht eines Halters mit einer Mehrzahl von Gewürzbehältern, teilweise geschnitten,
- Fig. 3: einen Schnitt entlang Linie 3-3 in Fig. 2, und
- Fig. 4: einen Schnitt entlang Linie 4-4 in Fig. 2.

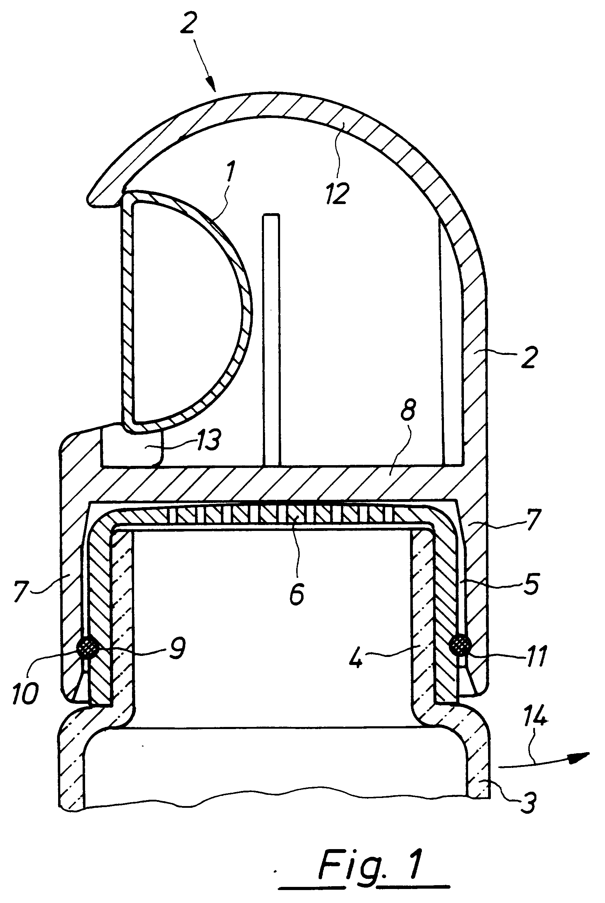

In Fig. 1 ist eine Halteschiene 1 in Form eines im Querschnitt halbkreisförmigen Rohres dargestellt, an dem ein Verschlußkörper 2 eines Gewürzbehälters 3 lösbar gehalten ist. Der Gewürzbehälter 3 besteht aus Glas, Kunststoff oder dergl. Auf seinem Hals 4 ist eine Kappe 5 mit einer Streuscheibe 6 angebracht. Der Verschlußkörper 2 weist ein nach unten zu offenes, rohrförmiges Aufnahmeteil 7 für den Behälterhals 4 bzw. dessen Kappe 5 auf, das durch eine Wand 8 nach oben zu abgeschlossen ist. Der Innendurchmesser des Aufnahmeteils 7 ist nur geringfügig größer als der Außendurchmesser der Kappe 5. In der Außenfläche der Kappe 5 ist eine Umfangsnut 9 angebracht, die einen elastischen O-Ring 10 aufnimmt. In der Innenfläche des Aufnahmeteils 7 ist eine zweite Umfangsnut 11 vorgesehen, in welche der O-Ring 10 beim Aufsetzten des Verschlußkörpers einrastet. Der O-Ring 10 stellt eine dichte Verbindung zwischen dem Gewürzbehälter 3 und der Verschlußkappe 2 her. Die Tiefe der den O-Ring 10 aufnehmenden Umfangsnut 9 ist größer als die Tiefe der anderen Umfangsnut 11, um einmal sicherzustellen, daß der O-Ring 10 in seiner Nut 9 bleibt, wenn der Verschlußkörper 2 vom Gewürzbehälter 3 abgezogen oder auf diesen aufgeschoben wird, und um andererseits den Kraftaufwand beim Aufschieben und Abziehen des Verschlußkörpers 2 zu verringern, da der O-Ring 10 nur geringfügig in die zweite Umfangsnut 11 hineinragt.

Der Verschlußkörper 2 weist ein bügelförmiges Teil 12 auf, mit dem er auf der Halteschiene 1 aufgehängt ist, und einen Haltenocken 13, der die Halteschiene 1 hintergreift. Soll der Gewürzbehälter 3 zusammen mit dem Verschlußkörper 2 von der Halteschiene 1 abgenommen werden, so wird der Gewürzbehälter in Richtung des Pfeiles 14 geschwenkt, wodurch der Verschlußkörper von der Halteschiene 1 freikommt. Zum normalen Gebrauch bleibt der Verschlußkörper 2 an der Halteschiene 1 und der Gewürzbehälter 3 wird von dem Verschlußkörper 2 abgezogen und in diesen nach Gebrauch wieder eingesteckt. Die Halteschiene ist Teil eines Halters, der an einer Wand befestigt wird.

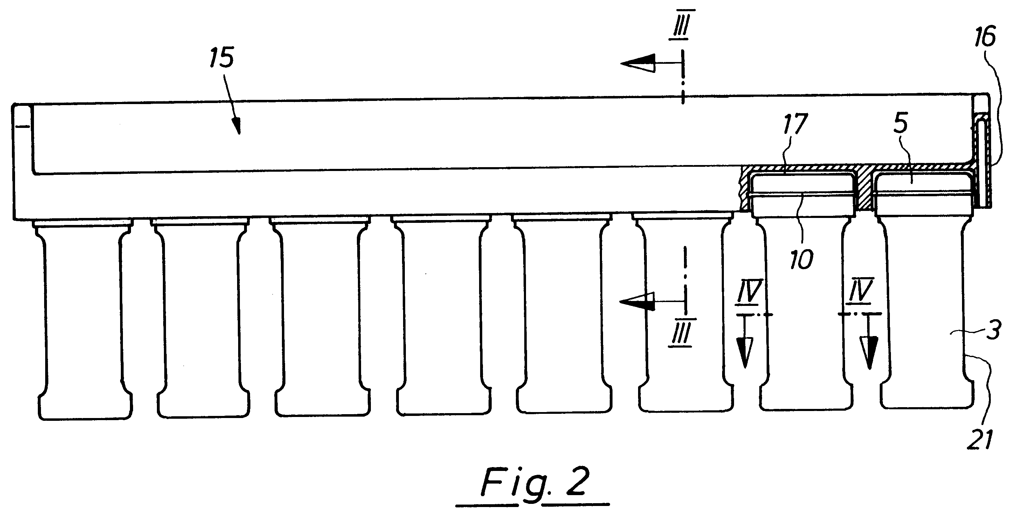

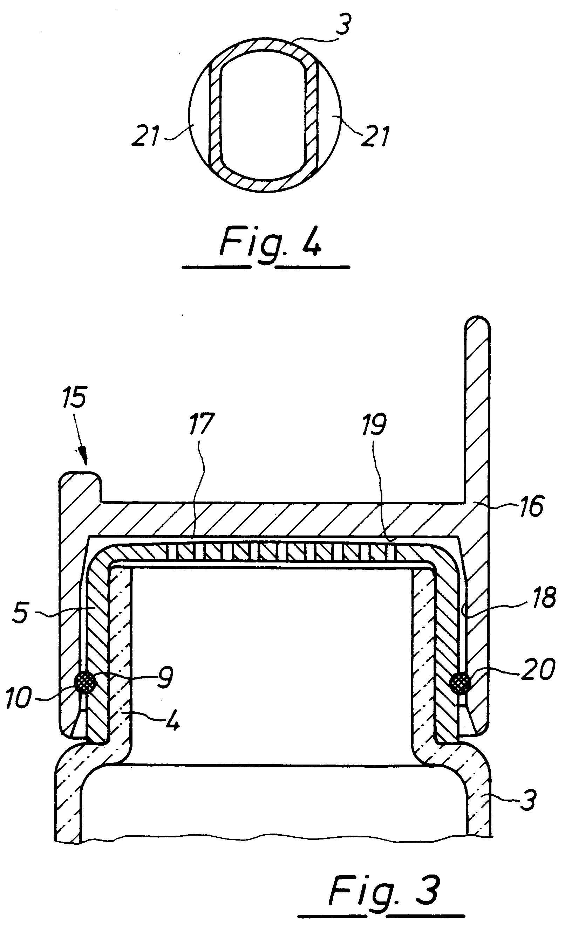

In Fig. 2 und 3 ist ein Halter 15 für eine Mehrzahl von Gewürzbehältern 3 dargestellt. Dieser Halter weist eine vorzugsweise aus Kunststoff bestehende Schiene 16 auf, in den die Verschlußkörper der Gewürzbehälter integriert sind. Zu diesem Zweck ist die Schiene 16 mit nach unten zu offenen Ausnehmungen 17 versehen, die jeweils eine zylindrische Umfangswand 18 und eine obere Abschlußwand 19 aufweisen. In der Innenfläche der Umfangswand 18 ist eine der Umfangsnut 11 entsprechende Umfangsnut 20 vorgesehen. Die Gewürzgläser 3 sind wie beim Ausführungsbeispiel gemäß Fig. 1 mit einer Kappe 5 versehen, die an ihrer Außenfläche eine Umfangsnut 9 mit einem O-Ring 10 aufweist. Zum Gebrauch wird der betreffende Gewürzbehälter unter Verformung des O-Ringes aus der zugehörigen Ausnehmung 17 abgezogen und nach Gebrauch wieder in diese eingeschoben. Die Gewürzbehälter haben eine im wesentlichen zylindrische Form und sind zur Erleichterung der Handhabung an zwei diametral gegenüberliegenden Seiten mit Griffmulden oder Abflachungen 21 versehen, wie in Fig. 4 dargestellt.

Abweichend von den dargestellten Ausführungsbeispielen kann der O-Ring 10 natürlich auch in der Umfangsnut 11 bzw. 20 angeordnet werden, die dann tiefer ausgeführt wird als die Umfangsnut 9. Wird der Behälterhals 4 nicht mit der Kappe 5 versehen, so wird die Umfangsnut 9 direkt in der Außenfläche des Behälterhalses 4 vorgesehen.

## Patentansprüche

1. Einheit, bestehend aus einem Halter (1 bzw. 15) und mehreren hängend angeordneten Gewürzbehältern (3), die mit dem Behälterhals (4) jeweils in einen Verschlußkörper (2 bzw. 17, 18, 19) eintauschen, dadurch gekennzeichnet, daß die Gewürzbehälter (3) in den jeweiligen am Halter (1 bzw. 15) vorgesehenen Verschlußkörpern (2 bzw. 17, 18, 19) durch die Federkraft eines elastischen O-Ringes (10) gehalten sind, wobei der Behälterhals (4) eine äußere Umfangsnut (9) und der Verschlußkörper (2 bzw. 17, 18, 19) eine innere Umfangsnut (11 bzw. 20) zur Aufnahme des der O-Ringes (10), der in beide Umfangsnuten eingreift, aufweist.

2. Einheit nach Anspruch 1, dadurch gekennzeichnet, daß die den O-Ring aufnehmende Umfangsnut (9) tiefer als die andere Umfangsnut (11 bzw. 20) ist.

3. Einheit nach Anspruch 1 oder 2, dadurch gekennzeichnet, daß die äußere Umfangsnut (9) in der Außenfläche einer auf dem Behälterhals (4) angebrachten Kappe (5) mit Streuscheibe (6) vorgesehen ist.

4. Einheit nach einem der Ansprüche 1 bis 3, dadurch gekennzeichnet, daß der Verschlußkörper (2) Mittel (12) zum Einhängen in eine einen Teil des Halters bildende Halteschiene (1) aufweist.

5. Einheit nach einem der Ansprüche 1 bis 4, dadurch gekennzeichnet, daß die Verschlußkörper (17, 18, 19) in den Halter (15) integriert sind.

6. Einheit nach Anspruch 5, dadurch gekennzeichnet, daß der Halter (15) von einer Schiene (16) gebildet ist, in der zur Aufnahme der Behälterhälse (4) nach unten offene Ausnehmungen (17) vorgesehen sind, die jeweils von einer zylindrischen Umfangswand (18) mit einer Umfangsnut (20) und einer oberen Abschlußwand (19) begrenzt sind.

## Claims

1. Unit, comprising a holder (1 or 15) and a plurality of spice containers (3) which are arranged in a suspended manner and which are each inserted by the container neck (4) into a closure body (2 or 17, 18, 19), characterized in that the spice containers (3) are held in the respective closure bodies (2 or 17, 18, 19) provided on the holder (1 or 15) by the spring force of an elastic O-ring (10), the container neck (4) having an outer circumferential groove (9) and the closure body (2 or 17, 18, 19) having an inner circumferential groove (11 or 20) for receiving the O-ring (10) which engages in both circumferential grooves.

2. Unit according to Claim 1, characterized in that the circumferential groove (9) receiving the O-ring is deeper than the other circumferential groove (11 or 20).

3. Unit according to Claim 1 or 2, characterized in that the outer circumferential groove (9) is provided in the outer surface of a cap (5), mounted on the container neck (4), with a perforated disc (6).

4. Unit according to one of Claims 1 to 3, characterized in that the closure body (2) has means (12) for suspension in a holding rail (1) forming part of the holder.

5. Unit according to one of Claims 1 to 4, characterized in that the closure bodies (17, 18, 19) are integrated into the holder (15).

6. Unit according to Claim 5, characterized in that the holder (15) is formed by a rail (16) in which recesses (17) are provided to receive the container necks (4), which recesses are open towards the bottom and are each bounded by a cylindrical circumferential wall (18) with a circumferential groove (20) and an upper terminating wall (19).

## Revendications

1. Ensemble unitaire composé d'une console (1, respectivement 15) et de plusieurs récipients à épices (3) qui sont agencés en suspension et s'enfoncent, par leur goulot (4), dans un corps obturateur considéré (2, respectivement 17, 18, 19), caractérisé par le fait que les récipients à épices (3) sont retenus, dans les corps obturateurs considérés (2, respectivement 17, 18, 19) prévus sur la console (1, respectivement 15), par la force élastique d'une bague torique élastique (10), le goulot (4) des récipients présentant une rainure périphérique extérieure (9) et le corps obturateur (2, respectivement 17, 18, 19) comportant une rainure périphérique intérieure (11, respectivement 20), en vue de recevoir la bague torique (10) qui s'engage dans les deux rainures périphériques.

2. Ensemble unitaire selon la revendication 1, caractérisé par le fait que la rainure périphérique (9), recevant la bague torique, est plus profonde que l'autre rainure périphérique (11, respectivement 20).

3. Ensemble unitaire selon la revendication 1 ou 2, caractérisé par le fait que la rainure périphérique extérieure (9) est prévue dans la surface extérieure d'un capuchon (5) muni d'un disque de saupoudrage (6) et installé sur le goulot (4) des récipients.

4. Ensemble unitaire selon l'une des revendications 1 à 3, caractérisé par le fait que le corps obturateur (2) comporte des moyens (12) en vue de la suspension dans un rail de retenue (1) formant une partie de la console.

5. Ensemble unitaire selon l'une des revendications 1 à 4, caractérisé par le fait que les corps obturateurs (17, 18, 19) sont intégrés dans la console (15).

6. Ensemble unitaire selon la revendication 5, caractérisé par le fait que la console (15) est formée d'un rail (16) dans lequel sont prévus, pour recevoir les goulots (4) des récipients, des évidements (17) ouverts vers le bas et délimités, à chaque fois, par une paroi circonférentielle cylindrique (18) munie d'une rainure périphérique (20), et par une paroi supérieure d'obturation (19).
